# FASCICULE DE BREVET EUROPEEN

(11) **EP 0 453 344 B1**
(45) Date de publication et mention de la délivrance du brevet: **31.08.1994**
(21) Numéro de dépôt: 91400888.3
(22) Date de dépôt: 02.04.1991
(51) Int. Cl.: G01L 3/10

(54) **Dispositif de mesure d'un couple sur un arbre**
Drehmomentmessvorrichtung an einer Welle
Device for measuring the torque of a shaft

(30) Priorité: 20.04.1990 FR 9005046
(43) Date de publication de la demande: 23.10.1991
(73) Titulaire: SNR ROULEMENTS, F-74010 Annecy (FR)
(72) Inventeur: Peilloud, Fernand, F-74540 Alby S/Cheran (FR)
(74) Mandataire: Ernst-Schonberg, Michel

(56) Documents cités:
- FR-A- 2 626 368
- US-A- 4 119 911
- PATENT ABSTRACTS OF JAPAN, vol. 13, no. 337 (P-906)[3685], 28 juillet 1989; & JP-A-1 97 826

## Description

L'invention concerne un dispositif de mesure d'un couple sur un arbre tournant, sur lequel sont montés deux aimants multipolaires fixés en deux sections droites axialement espacées dudit arbre incluant un moyen compteur fixe, sensible au passage des aimants et qui délivre un signal traité proportionnel au couple.

L'invention concerne également un dispositif de mesure de la vitesse de rotation de l'arbre et de la puissance transmise par ledit arbre.

La publication FR-A-2.626.368 décrit un dispositif de mesure d'un couple dans lequel deux éléments capteurs constituent en combinaison avec les aimants codeurs deux organes de mesure. Ce dispositif permet la mesure d'un couple de torsion à partir du déphasage des signaux délivrés par les éléments capteurs lorsqu'un élément codeur est angulairement décalé par rapport à l'autre élément codeur. Ce dispositif ne permet pas la mesure permanente du couple ni de déterminer ses variations.

La publication US-A-4119911 décrit un dispositif de mesure de déplacements relatif aux deux aimants à denture magnétique à pôles alternés, dans lequel un capteur magnétorésistif délivre un signal représentatif du décalage des aimants.

Le patent abstract of JAPAN JP-A-197826 décrit un dispositif de mesure de couple qui comporte deux tambours possédant des pôles Nord et Sud. Dans ce dispositif, les champs magnétiques "enregistrés" sur les tambours ne coopèrent pas pour donner un champ magnétique résultant et défilent devant des magnétorésistances décalées d'une distance égale à une fraction du pas polaire des tambours.

L'invention a pour objet de permettre la mesure du couple sur un arbre, même lorsque ce dernier est bloqué ou lorsque sa vitesse de rotation varie.

L'invention a aussi pour objet un dispositif de construction simple et économique qui permet la mesure des petits angles de torsion.

Selon l'invention le moyen capteur est situé entre les deux aimants et possède deux élèments détecteurs des champs d'induction magnétique sinusoïdaux fournis par les aimants, dont les centres sont angulairement décalés d'une distance égale au quart de la période desdits champs d'induction.

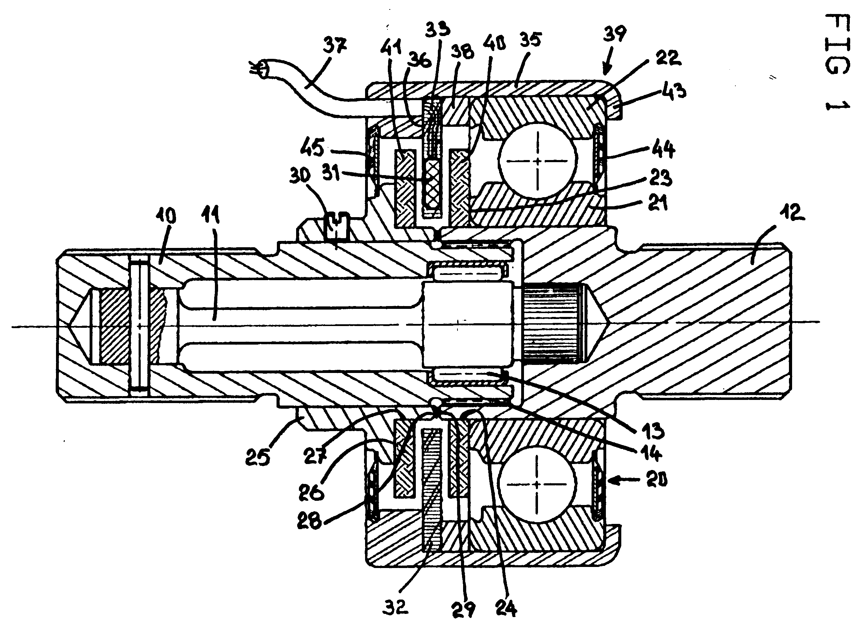

D'autres caractéristiques et avantages de l'invention apparaîtront à la lecture de la description d'un exemple de réalisation du dispositif faite en référence au dessin annexé dans lequel la figure 1 est une vue en coupe longitudinale d'un montage d'application du dispositif sur un arbre tournant portant une liaison élastique constituée par une barre de torsion.

La figure 2a, est une représentation schématique des composants de mesure au dispositif.

la figure 2b, illustre la répartition des champs magnétiques d'induction devant le moyen capteur.

La figure 3, est le diagramme de variation du champ résultant et des champs d'induction magnétique produits par les aimants.

La figure 4a, est le diagramme de variation du champ résultant et des champs d'induction magnétique en concordance de phase.

La figure 4b, est le diagramme de variation du champ résultant et des champs d'induction magnétique en opposition de phase.

La figure 5, est le diagramme de variation du champ résultant sous l'effet de différentes valeurs du couple de torsion.

La figure 6, est une représentation schématique du moyen capteur dans le champ magnétique résultant.

La figure 7, est une courbe des variations du signal de sortie en fonction du décalage angulaire de l'arbre.

Les figures 8 et 9, sont des diagrammes de variation du signal de sortie en fonction des variations du couple pour deux valeurs de règlage de répartition des champs d'induction.

Selon la figure 1, un tronçon d'arbre 10 est accouplé à un tronçon d'arbre 12 au moyen d'une liaison élastique déformable constituée par une barre de torsion 11. Le tronçon 10 désigné par convention arbre d'entrée est relié à un organe moteur non représenté. Le tronçon 12 désigné par convention arbre de sortie est relié à un organe récepteur non représenté. La barre de torsion 11 disposée coaxialement et concentriquement aux tronçons 10 et 12 permet la transmission du mouvement de rotation des dits trançons d'arbre et une déformation de torsion de la barre 11 lorsque l'organe récepteur oppose une résistance mécanique à la rotation imposée par l'organe moteur.

Le tronçon d'arbre 10 est guidé en rotation par un palier de roulement 13 sur une portée de la barre de torsion 11.

Un emmanchement 14 à cannelures avec jeu angulaire est aménagé entre l'arbre d'entrée 10 et l'arbre de sortie 12 et permet d'obtenir un libre déplacement angulaire de l'arbre 11 pour un angle compatible au jeu de l'emmanchement. Au delà de cette valeur d'angle, l'arbre 10 et l'arbre 12 sont en contact par les flancs des cannelures et sont directement liés en rotation.

Un palier à billes 20 est monté serré sur l'arbre de sortie 12 et posséde une bague intérieure 21 et une bague extérieure 22. La face intérieure 23 de la bague intérieure 21 constitue l'appui d'un aimant multipolaire 40 solidarisé dans une section droite de l'arbre 12 par exemple par collage simultanément sur une portée 24 de l'arbre 12 et la face 23 de la bague 21.

Un manchon 25 monté à ajustement libre sur l'arbre d'entrée 10 posséde un épaulement 26 de maintien en appui d'un aimant multipolaire 41 solidarisé par exemple par collage simultanément contre l'épaulement 26 et une portée 27 usinée sur le manchon 25 dans une section droite de l'arbre 10.

L'écartement des aimants multipolaires 40 et 41 est en partie donné par la longueur de la portée 27 du manchon 25 dont la face 28 est en contact glissant avec la face 29 de la portée 24 de l'arbre récepteur.

Le manchon 25 comporte également une liaison d'immobilisation par vis 30 sur l'arbre moteur 10.

Un capteur à effet Hall ou à magnétorésistance 31 est monté sur une plaque support 32 portant les connexions et sorties électriques 33.

La plaque support 32 est enchassée dans un boîtier fixe 35 entre un épaulement 36 du dit boîtier portant en outre un orifice de passage des conducteurs 37 et une entretoise annulaire 38 en appui contre la face de la bague extérieure 22 du palier 20.

Le boîtier 35 contient ainsi l'ensemble des aimants 40, 41, le capteur 31 et le palier 20 et comporte à son extrémité 39 un bord tombé 43 de retenue axiale du palier 20.

Le dispositif comporte en outre des joints d'étanchéité 44 et 45 respectivement montés entre la bague 22 et la bague 21 du palier à roulement et entre le boîtier 35 et le manchon 25 qui ferment le boîtier 35.

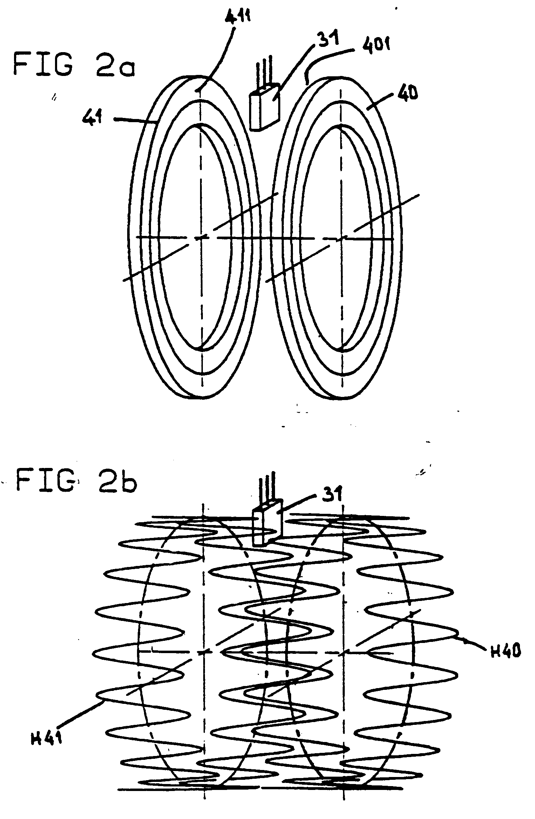

La figure 2a, représente une vue éclatée de composants de mesure. Les aimants 40 et 41 sont réalisés dans un matériau ferromagnétique tel qu'une plastoferrite formée de particules ferromagnétiques et d'un liant plastique. Les aimants sont magnétisés de façon identique sur une de leur face 401 et 411 par un procédé connu d'aimantation multipolaire.

Les faces magnétiques 401 et 411 sont tournées l'une vers l'autre. Le capteur 31 à effet Hall ou à magnétorésistance est placé entre les deux faces 401 et 411 sans contact avec l'une et l'autre des dites faces magnétiques.

Chaque aimant 40 et 41 émet un champ magnétique d'induction H 40 ou H 41 dans une direction perpendiculaire aux faces 401 et 411.

L'induction magnétique H 40 ou H 41 mesurée à mi-distance des faces 401 et 411 dans une direction perpendiculaire aux dites faces présente un profil de fonction cyclique sinusoïdale. Le capteur 31 mesure la valeur d'induction magnétique résultant de la combinaison des champs d'induction magnétique H 40 et H 41.

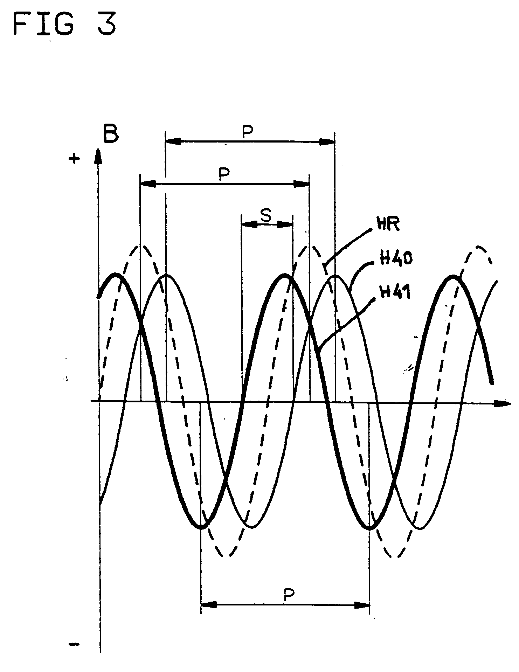

La figure 3, est une représentation développée des champs d'induction magnétique H 40 et H 41, déphasés d'une valeur S en un point de mesure situé à mi-distance entre les aimants 40 et 41, en fonction de sa position sur une directrice paralléle aux faces 401 et 411.

Le champ d'induction magnétique résultant HR en chaque point de la directrice, est égal à la somme algébrique des champs H 40 et H 41 sinusoïdaux. Le champ HR est une fonction sinusoïdale de même période P que les deux champs H 40 et H 41.

La valeur du déphasage magnétique S est réglée initialement par une rotation du manchon 25 sur l'arbre d'entrée 10. La vis de blocage 30 assure le maintien de ce réglage initial.

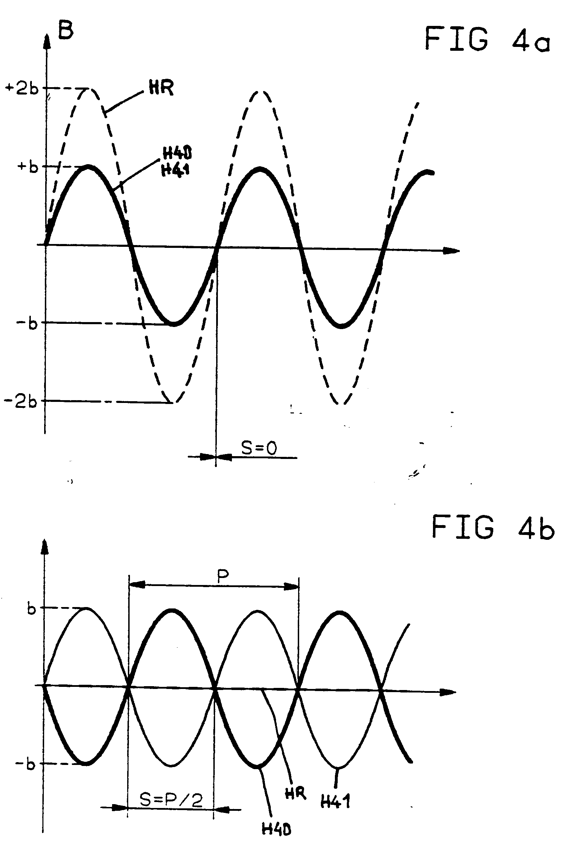

La figure 4a, est une représentation développée de deux champs d'induction magnétique H 40 et H 41 en concordance de phase, lorque le déphasage S est nul.

Le champ d'induction magnétique résultant HR prend alors une valeur, égale à 2 fois la valeur d'un des deux champs composants en tout point de mesure.

La figure 4b, est une représentation développée des deux champs d'induction magnétique H 40 et H 41 en opposition de phase, lorsque ce déphasage S est égal à une demi-période de l'un quelconque des deux champs H 40 et H 41. Le champ d'induction magnétique résultant prend alors en tout point de mesure une valeur nulle.

A la suite du réglage du déphasage magnétique à une valeur initiale nulle, l'application d'un couple de torsion entre le tronçon d'arbre d'entrée 10 et le tronçon d'arbre de sortie 12 entraîne un déplacement angulaire des aimants 40 et 41 par l'intermédiaire de l'arbre de torsion 11. Ce déplacement angulaire se traduit par une modification du déphasage magnétique S entre les champs d'induction H 40 et H41.

Le champ d'induction magnétique résultant HR prend une valeur inférieure à la valeur initiale représentée à la figure 4a. Lorsque le décalage en torsion correspond à un déphasage égal à une demi-période (S = P/2), le champ magnétique HR est nul.

Lorsque le couple est nul, l'arbre de torsion 11 rappelle élastiquement les tronçons d'arbre 10 et 12 dans la position initiale et le champ d'induction résultant HR reprend sa valeur initiale.

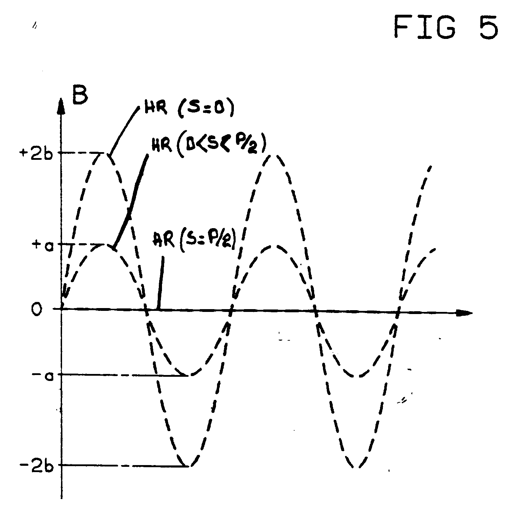

La figure 5, représente la variation du champ d'induction magnétique résultant HR pour trois valeurs du couple de torsion avec un réglage initial où S = 0 sans application du couple.

Sans application de couple, le champ d'induction magnétique HR garde une valeur de crête de + 2b, comme représenté à la figure 4a. L'application d'un couple intermédiaire entraîne une rotation relative des aimants 40 et 41 et se traduit par un déphasage 0 <S<P/2 des champs H 40 et H 41, le champ résultant HR prend une valeur de crêtes (+ a) inférieure à (+ 2b). L'application d'un couple à la limite des possibilités de mesure du dispositif assure une rotation relative des aimants 40 et 41 et un déphasage des champs H 40 et H 41 avec un déphasage S = P/2. Le champ résultant HR prend alors une valeur nulle.

(a) peut prendre toutes les valeurs entre + 2b et 0, proportionnellement à S tel que 0<S<P/2. La valeur de S ne dépend que du couple de torsion appliqué sur la barre 11 par l'intermédiaire de l'arbre d'entrée 10 et de l'arbre de sortie 12. La relation entre la valeur de couple appliqué et le déphasage S ne dépend que des caractéristiques physiques et de rigidité en torsion de la barre 11.

La transformation en signaux électriques des variations du champ d'induction magnétique HR en fonction du couple de torsion est réalisée par le capteur 31. Le capteur 31 est constitué de deux élèments sensibles identiques 301 et 302 à effet Hall ou magnétorésistance et délivre des tensions de sortie proportionnelles au champ d'induction magnétique HR qui les traverse.

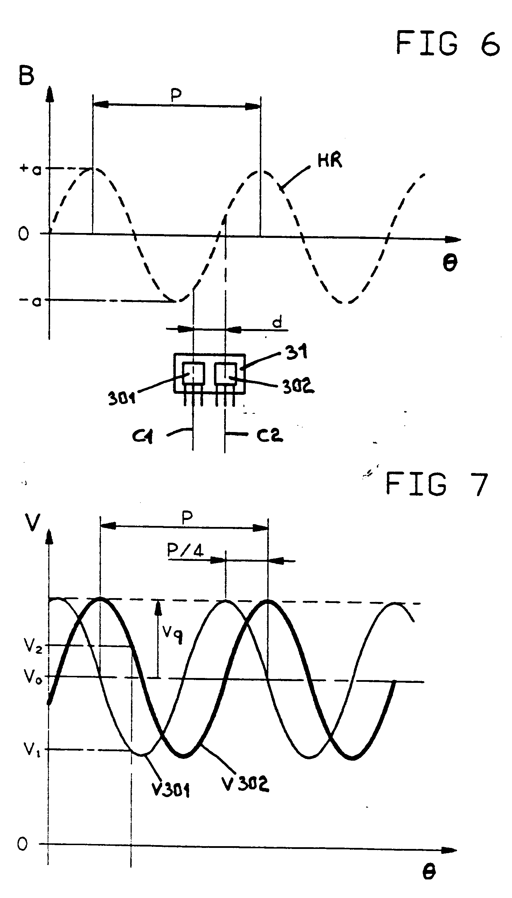

Comme indiqué à la figure 6, les centres C1, C2 des élèments sensibles 301 et 302 sont situés en quadrature par rapport au champ d'induction magnétique sinusoïdal HR, c'est-à-dire à une distance d = (2n + 1) P/4 l'un de l'autre, "n" étant un nombre entier positif ou nul.

La figure 7, représente la variation du signal représentatif du couple mesuré sur arbre tournant. Pour un couple constant exercé sur la barre de torsion 11, accompagné d'une rotation angulaire théta ϑ de l'arbre d'entrée 10, de la barre de torsion 11 et de l'arbre de sortie 12, des signaux électriques de tension V 301 et V 302 sont délivrés par chacun des élèments sensibles 301 et 302. L'amplitude de ces signaux par rapport à une constante de tension Vo, sont proportionnels à la valeur du champ d'induction HR qui traverse chacun des élèments. Les signaux sont de même amplitude, et ont chacun des variations de même nature, de même période P que la fonction sinusoïdale HR et sont déphasés l'un par rapport à l'autre de P/4.

Les signaux sont centrés sur une valeur Vo à laquelle correspond la tension délivrée par l'un ou l'autre des élèments sensibles en l'absence de champ magnétique.

A toute valeur de théta ϑ correspond une valeur V₁ du signal V 301 et une valeur V₂ du signal V 302 et
la moyenne quadratique définie par la relation Vq = [(V1 - Vo)² + (V2 - Vo)²]^{1/2} est indépendante de théta ϑ, angle de rotation simultané des arbres 10, 11 et 12.

Par contre, la moyenne quadratique Vq ne dépend que de l'amplitude des signaux V 301 et V 302, donc de la valeur de crête du champ d'induction magnétique HR et de la valeur du couple appliqué entre l'arbre 10 et l'arbre de sortie 12.

On notera que Vq peut-être obtenu directement par la mesure des tensions V1 et V2 connaissant la valeur Vo, au moyen d'un traitement électronique ou informatique connu.

Cette valeur Vq a été reportée dans la figure 7 en prenant Vo pour origine.

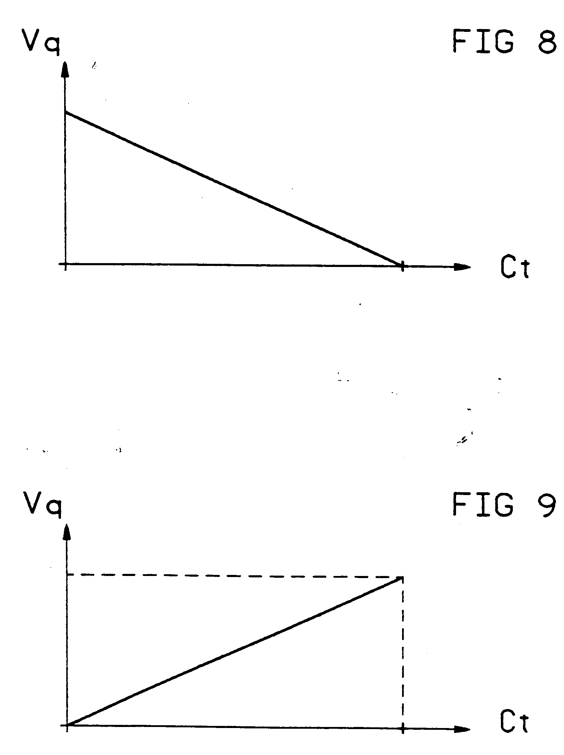

La relation entre Vq et le couple de torsion Ct appliqué sur l'arbre 11, lorsque le déphasage magnétique initial est réglé à 0, est représentée à la figure 8. Vq varie alors en proportion inverse du couple appliqué.

Lorsque le déphasage magnétique initial est fixé à une valeur S = P/2, Vq varie alors proportionnellement au couple appliqué, comme représenté à la figure 9.

## Revendications

1. Dispositif de mesure d'un couple de torsion appliqué à un arbre (10, 11, 12) qui possède deux aimants multipolaires (40, 41), fixés en deux sections droites axialement espacées dudit arbre, un moyen capteur (31) fixe situé entre les deux aimants (40, 41) sensible au passage des aimants (40, 41) et qui délivre un signal de sortie destiné à fournir un signal traité proportionnel au couple de torsion, caractérisé par le fait que le moyen capteur (31) est constitué par deux éléments sensibles (301, 302) dont les centres (C1, C2) sont situés en quadrature par rapport au champ d'induction magnétique sinusoïdal (HR) résultant de la combinaison des champs d'induction magnétique sinusoïdaux (H40, H41) émis par les aimants (40, 41)

2. Dispositif de mesure selon la revendication 1, caractérisé par le fait que l'un des aimants, (40, 41) est porté par un moyen d'ajustement anqulaire (25).

3. Dispositif de mesure selon l'ensemble des revendications 1 et 2, caractérisé par le fait que l'arbre est constitué de manière en soi connue par deux tronçons (10, 12) accouplés par un organe (11) de liaison élastiquement déformable et est porté par un palier (20) monté dans le boîtier de montage (35) porteur du moyen capteur (31).

4. Dispositif de mesure selon l'ensemble des revendications 1 à 3 caractérisé par le fait que le boîtier de montage (35) contient l'ensemble des aimants (40, 41) et le moyen capteur (31) est fermé à chaque extrémité par un joint d'étanchéïté, (44, 45).

## Patentansprüche

1. Meßvorrichtung für das eine Welle (10, 11, 12) beaufschlagende Drehmoment, welche zwei mehrpolige Magnete (40, 41) aufweist, die entlang zweier rechtwinkliger im axialen Abstand von der Welle laufender Querschnitte befestigt sind, sowie eine feststehende Fühleranordnung (31) zwiwchen den beiden Magneten (40, 41) aufweist, die auf den Vorbeilauf der Magnete (40, 41) anspricht und die Ausgangssignale liefert zur Erzeugung eines Signals das proportional zum Drehmoment geformt worden ist, dadurch gekennzeichnet, daß die Fühleranordnung (31) aus zwei Bauteilen (301, 302) besteht, deren Mitten C1, C2 quadratisch bezüglich des magnetischen sinusförmigen Induktionsfeldes HR angeordnet sind, das durch die Überlagerung der von den Magneten (4β. 41) erzeugten sinusförmigen magnetischen Induktionsfeldern entsteht.

2. Meßvorrichtung nach Anspruch 1, dadurch gekennzeichnet, daß die Magnete (40, 41) von einer ringförmigen Einstellanordnung (25) getragen werden.

3. Meßvorrichtung nach Ansprüchen 1 und 2, dadurch gekennzeichnet, daß die Welle in an sich bekannter Weise aus zwei über ein Verbindungsteil (11) elastisch miteinander gekuppelten Abschnitten (10, 12b) besteht und von einem Lager (20) getragen wird, das in einem Montagegehäuse (35) angeordnet ist, welches die Fühleranordnung (31) trägt.

4. Meßvorrichtung nach den Ansprüchen 1 bis 3, dadurch gekennzeichnet, daß das Montagegehäuse (35) die Anordnung aus Magneten (40, 41) und die Fühleranordnung (31) trägt und an jedem Ende durch eine Dichtung (44, 45) verschlossen ist.

## Claims

1. A device for measuring a torsional couple applied to a shaft (10, 11, 12) which comprises two multipolar magnets (40, 41) fixed in two axially spaced vertical sections of this shaft, a fixed sensor means (31) disposed between the two magnets (40, 41) which is sensitive to the passage of the magnets (40, 41) and supplies an output signal adapted to supply a processed signal proportional to the torsional couple, characterized in that the sensor means (31) is formed by two detector members (301, 302) whose centres (C1, C2) are disposed in quadrature with respect to the sinusoidal magnetic induction field (HR) resulting from the combination of the sinusoidal magnetic induction fields (H40, H41) transmitted by the magnets (40, 41).

2. A measuring device as claimed in claim 1, characterized in that one of the magnets (40, 41) is borne by an angular adjustment means (25).

3. A measuring device as claimed in claims 1 and 2, characterized in that the shaft is formed in a known manner by two sections (10, 12) coupled by an elastically deformable member and is borne by a bearing (20) mounted in the assembly housing (35) bearing the sensor means (31).

4. A measuring device as claimed in claims 1 to 3, characterized in that the assembly housing (35) contains the assembly of the magnets (40, 41) and the sensor means (31) is closed at each end by a sealing gasket (44, 45).
